# EUROPEAN PATENT APPLICATION

(11) **EP 1 244 046 A1**
(43) Date of publication of application: **25.09.2002**
(21) Application number: 99943473.1
(22) Date of filing: 17.09.1999
(51) Int. Cl.: G06F 17/60

(54) **SYSTEM FOR EFFECTING PREPAYMENT OF PRODUCTS OR SERVICES PURCHASED BY ELECTRONIC MEANS**

(71) Applicant: Sacal Y Micha, Elias Salomon, Colonia Bosques de las Lomas, Mexico, D.F. 11700 (MX)
(72) Inventor: Sacal Y Micha, Elias Salomon, Colonia Bosques de las Lomas, Mexico, D.F. 11700 (MX)
(74) Representative: Schmidt, Steffen J., Dipl.-Ing.
(86) International application number: MX9900027
(87) International publication number: WO01022309

(57) **Abstract**

A system for carrying out a prepayment for products or services acquired through electronic means of the comprising an electronic network where at least one products or services supplier's electronic terminal and at least one buyer's electronic terminal are connected thereto is disclosed. The system also includes at least one prepayment electronic terminal able to generate a financial instrument of payment with an identification number associated with an amount prepaid by a buyer and to a security code; a data storage electronic terminal connected to both, the prepayment electronic terminal and the other computers of the electronic network, said data storage electronic terminal including a data base in which the financial instrument of payment identification number together with its security code and the prepaid amount associated therewith are registered.

## Description

### FIELD OF THE INVENTION

The present invention relates to the techniques for carrying out electronic commercial transactions, and more particularly, to a system for carrying out a prepayment for products or services acquired through electronic means.

### BACKGROUND OF THE INVENTION

Recently, the importance of computer networks for products or services commercialization, such as the one referred to as INTERNET, has increased as technology reaches more users at low cost.

For that reason, an infinity of methods and systems for carrying out transactions through electronic means has been developed. The methods disclosed in U.S.A. Patents Nos. 5,692,132 and 5,905,736 are within the most representative.

In regard to US Patent No. 5,692,132, it describes a method to settle cashless transactions within a computer network with a consumption terminal device coupled to said electronic network having data input means a communication device and a memory.

The method comprises the following steps:
1. Storing representative data of at least one available fund within the memory of the consumption terminal device;
2. Connecting to the computer network;
3. Receiving information data upon the transaction from a merchant computer connected to the computer network;
4. Transmitting selection data from the consumption terminal device to the merchant computer through the computer network as a response to the data input means and to the transaction information;
5.- Increasing the available funds located in the consumption terminal device memory if the difference between the transaction cost and the available fund is less than a pre-determined limit;
6.- Reducing funds as a response to the transaction cost and to the selection data.

The above mentioned US patent states that the increase in the available fund is carried out through a supplier of financial services, and it can be carried out in two ways, by an updated number of increases in available funds, or by a maximum number of increases in available funds, so that a confirmation on behalf of the supplier of financial services would be unnecessary, unless the number of increases in available funds is exceeded. Likewise, an identification account to access to increases in funds through the financial services supplier is required.

In that kind of systems, usually the identification number to verify funds, is a credit or debit card number through which the financial services supplier identifies the buyer who is at the consumption terminal device. It is easy to imagine that this kind of systems or methods are highly susceptible to breach of faith, since once a computerized in-network products or services supplier receives the debit or credit card identification number, it may further charge debits non authorized by the owner of the financial instrument.

On the other hand, US Patent No. 5,905,736 relates to a method to bill an account associated with a user's identity, for the cost of a transaction carried out by a network between a supplier and a user terminal, in which a temporary address within the network which is used for the transaction is provided to the user terminal. Both, transaction and billing are carried out within the network. Method disclosed therein, comprises the following steps:
1. Receiving and identifying a signal associated with the user's identity and with the temporally provided address;
2. Storing association between user's identity and temporally provided address;
3. Receiving billing signal to bill for the transaction cost, said billing signal including transaction cost an the address temporally designated to the terminal;
4. Referring the transaction cost at collection signal to the account associated between the temporarily provided address and user's identity, and
5. Billing the account associated with user's identity for the transaction cost.

Said US patent further discloses some embodiments in which a requisition for the transaction transmitted from the user terminal is received, and the same is responded to settle transaction and billing.

Preferred embodiments on this system lead towards billing through a telephone bill, so that this kind of systems reduces the risk of breach of faith by the use of credit cards, by reducing information flow only to one company. However, in this case, the transaction performed turns to be less safe for the supplier, since the supplier is not sure if the buyer has enough funds to afford the product or service cost, since it will depend on a post-payment according to billing. Thus, in some cases, products or services collection could be even impossible, in those cases in which a buyer moves from his/her residence and telephone bill is not paid.

There are other systems to settle computerized network commercial transactions, but all of these have in common the need to request information upon clients or consumers whether for billing purposes in which the payment will be further made or for verifying existing funds on some financial instrument on the buyer's name, which turns in the above mentioned disadvantages for suppliers or clients inherent to this systems. Nevertheless, up to date, a system through which products or services payment could be guaranteed for suppliers anywhere in the world at a user's request, who does not need a post-payment billing or financial instruments information on a buyer's name but to carry it out as if it was an in-cash transaction within a store through a financial instrument of payment has not been known.

Consequently, for long it has been sought to overcome the drawbacks in the currently used methods for carrying out electronic commercial transactions by means of a system carry out a prepayment for products or services acquired through electronic means which, besides allowing electronic commercial transactions with the minimum risk for both, the buyer and the supplier, allows international trade of products or services through a financial instrument of payment.

### OBJECTS OF THE INVENTION

Considering the prior art drawbacks, it is an object of the present invention to provide a system for carrying out a prepayment for products or services acquired through electronic means wherein a buyer identification is not necessary for both, billing or post-collection purposes as well as for verifying financial instruments on a buyer's name.

Another object of the present invention is to provide a system for carrying out a prepayment for products or services acquired through electronic means, where international trade of products or services through a financial instrument of payment is feasible.

An additional object of the present invention is to provide a system for carrying out a worldwide prepayment for products or services acquired through electronic means which does not need the issuance of a bill for future collection in regard to the product or service.

Yet another object of the present invention is to provide a system for carrying out a prepayment for products or services, acquired through electronic means, which allows both, the buyer and product or service supplier to carrying out payment or collection transactions on their national currency still being located in different countries.

### BRIEF DESCRIPTION OF THE DRAWINGS

Novel aspects deemed characteristic of the present invention will be particularly set by the attached claims. However, the operation and other objects and advantages therewith, will be better understood in the following detailed description of a specific embodiment when considered in connection with the attached drawing, in which:

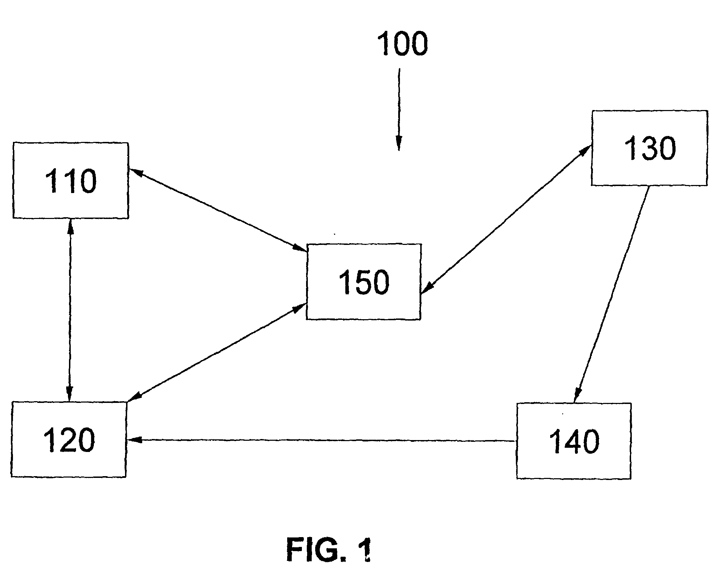

Figure 1 is a block diagram of the operation the system of the present invention.

### DETAILED DESCRIPTION

Referring to Figure 1, it shows a block diagram of the system for carrying out a prepayment for products or services acquired through electronic means of the present invention, which comprises an electronic network 100 to which at least a products or services supplier's electronic terminal 110 and at least a buyer's electronic terminal 120 and at least a prepayment electronic terminal 130 able to generate a financial instrument of payment 140 with an identification number associated with an amount prepaid by a buyer and with a security code are connected; a data storage electronic terminal 150 connected to both, the prepayment electronic terminal 130 and the other computers of the electronic network 100, said data storage electronic terminal including a data base in which an identification number for the financial instrument of payment 140 along with the security code and the prepaid amount associated thereof are registered.

Each electronic terminal of the system includes telecommunication means to allow information exchange within the electronic network; processing means with at least a computer software which carries out several operations according to the specific functions of each electronic terminal of the system; data input and output means to allow interaction among the electronic terminals and users thereof; and data storage means, being of temporal or permanent type, to allow the storage of information associated with financial instrument of payment identification numbers, along with the security code and the prepaid amount associated thereto.

Prepayment electronic terminal 130, further comprises printing means and perform the following functions: sending information concerning a prepaid amount to the data storage electronic terminal 150; receiving financial instrument of payment 140 identification number associated to the prepaid amount, along with the security code, from data storage electronic terminal 150; and, generating the financial instrument of payment 140 with the identification number associated with a prepaid amount incorporated thereon.

Regarding to data storage electronic terminal 150, it performs the following functions: receiving information upon the prepaid amount from the prepayment electronic terminal 130; designating a security code associated with the financial instrument of payment 140 identification number; sending financial instrument of payment 140 identification number associated with the prepaid amount together with the security code to prepayment electronic terminal 130; registering in the data base the financial instrument of payment identification number, the security code and the prepaid amount; receiving the identification number at least of one financial instrument of payment 140 together with the cost of the product or service to be acquired and the security code thereof, from the supplier's electronic terminal 110 or from the buyer's electronic terminal 120; comparing received security code with that previously stored in the data base for a financial instrument of payment 140 identification number; identifying the prepaid amount by consulting the data bank; designating a transaction identification number associated with the identified prepaid amount; comparing the selected service or product cost with respect to the prepaid amount; requesting an identification number of at least a second financial instrument of payment 140 with the respective security code to supplier's electronic terminal 110 in case the cost of the product or service to be acquired exceeded the prepaid amount; receiving the second financial instrument of payment identification number with the respective security code and adding the amount associated with the second financial instrument of payment 140 number plus the prepaid amount associated with the transaction identification number, prior consulting to the data bank; canceling the transaction in case the prepaid amount be less than the cost of product or service to be acquired and an additional identification number of an instrument of payment 140 is not received; deducting the cost of product or service from prepaid amount associated with the transaction identification number, designating a cost equal to zero in case of transaction cancellation; associating the amount resulting from the difference between the transaction cost and the originally prepaid amount with the financial instrument of payment 140 identification number; sending financial instrument of payment identification number 140, the transaction identification number and security code to supplier's electronic terminal 110, said financial instrument of payment 140 identification number being now associated to the amount resulting from the difference between transaction cost and the originally prepaid amount; sending the prepaid amount associated with the financial instrument of payment 140 identification number together with its security code to the buyer's electronic terminal.

Referring now the supplier's electronic terminal, it performs the following functions: sending information regarding products and/or services provided to the buyer's electronic terminal 120; receiving information upon selecting a product and/or service to be acquired from the buyer's electronic terminal 120; sending information upon products and/or services different payment procedures to the buyer's electronic terminal 120; receiving information upon payment procedure selection from the buyer's electronic terminal 120; sending requisition information of at least one financial instrument of payment 140 to the buyer's electronic terminal 120; receiving the identification number of at least one financial instrument of payment 140 from the buyer's electronic terminal 120 together with the respective security code as a way of payment of a product or service to be acquired; sending financial instrument of payment 140 identification number together with the respective security code and the cost of the product or service to be acquired to data storage electronic terminal 150; receiving transaction identification number from data storage electronic terminal 150; receiving financial instrument of payment 140 identification number together with the amount associated thereof and the corresponding security code from the data storage electronic terminal 150; sending the transaction identification number, the financial instrument of payment 140 identification number together with the amount associated thereof and the corresponding security code to the buyer's electronic terminal 120.

As regards to the buyer's electronic terminal 120, it performs the following functions: sending information regarding selection of a product and/or service to be acquired to the supplier's electronic terminal 110; receiving information upon products and/or services different payment procedures from the supplier's electronic terminal 110; sending information upon the selection of a payment procedure to the supplier's electronic terminal 110; receiving requisition information of at least one financial instrument of payment 140 from the supplier's electronic terminal 110; sending the identification number of at least one financial instrument of payment 140 to the supplier's electronic terminal 110 or to the data storage electronic terminal 150 together with its corresponding security code; receiving a transaction identification number from the supplier's electronic terminal 110 or from the data storage electronic terminal 150; receiving the financial instrument of payment identification number 140 together with the amount associated thereof and the respective security code from the data storage electronic terminal 150 or form the supplier's electronic terminal 110, and, receiving the transaction identification number from the supplier's electronic terminal 110.

The system operates according to the following sequence of steps:
(a) Sending the prepaid amount from prepayment electronic terminal 130 to the data storage electronic terminal 150.
(b) Sending financial instrument of payment 140 identification number associated with prepaid amount together with a security code, from the data storage electronic terminal 150 to the prepayment electronic terminal 130, and register of the security code and the prepaid amount identification number in the data base.
(c) Generating the financial instrument of payment 140 at the prepayment electronic terminal 130, wherein the identification number associated with the amount prepaid by the buyer is incorporated to said financial instrument 140.
(d) Information exchange regarding products and/or services to be provided, cost of the same and way of payment, between supplier's electronic terminal 110 and buyer's electronic terminal 120.
(e) Sending identification number of at least one financial instrument of payment 140 together with its security code from the buyer's electronic terminal 120 to the supplier's electronic terminal 110, as a way of payment for a product or service to be acquired.
(f) Sending the financial instrument of payment 140 identification number together with its security code and with the cost of the product or service to be acquired, from the supplier's electronic terminal 110 to the data storage electronic terminal 150.
(g) Prepaid amount identification by consulting in the data storage electronic terminal 150 data bank, which stores said prepaid amount and associates it with a transaction identification number, only if the security code received by the same corresponds to that stored in the data bank.
(h) Comparing the cost of the selected product or service at the data storage electronic terminal 150, with respect to that amount prepaid.
(i) In case the cost of the product or service to be acquired exceeds the amount prepaid, requesting from data storage electronic terminal 150 for an identification number of at least a second financial instrument of payment 140 to the supplier's electronic terminal 110, which subsequently requests it to the buyer's computer terminal 120, in order to repeat steps (d) and (e), or to cancel the transaction.
(j) If a second financial instrument of payment 140 was requested, the sum of the prepaid amount associated with the transaction identification number plus the prepaid amount verified for the second financial instrument of payment 140 shall be made, and the association of the sum as prepaid amount with the same transaction identification shall be made from the data storage electronic terminal.
(k) Deducting the product or service cost from prepaid amount associated with the transaction identification number in the data storage electronic terminal 150, designating a cost equal to zero in case the transaction is cancelled.
(I) Association between the amount resulting from the difference between the transaction cost and the amount originally prepaid and the financial instrument of payment 140 identification number with the respective security code, at the data storage electronic terminal 150.
(m) Sending the financial instrument of payment 140 identification number, its security code and the transaction identification number from data storage electronic terminal 150 to the supplier's electronic terminal 110, said financial instrument of payment 140 identification number being associated now to the amount resulting from the difference between the transaction cost and the originally prepaid amount.
(n) Sending the financial instrument of payment 140 identification number, its security code and the transaction identification number from the supplier's electronic terminal 110, to the buyer's electronic terminal 120.

As it can be noted from steps (I) to (m), the financial instrument of payment 140 can be re-used for a new transaction provided that it has an associated amount. In a preferred embodiment, security code from steps (I) to (n), associated with the amount resulting from the difference between the transaction cost and the originally prepaid amount, is different to the security code of the security code of the original bill.

It is worth to mention that financial instrument of payment 140 identification number could be sent from buyer's electronic terminal 120 to data storage electronic terminal 150, together with the security code, in order to let said data storage electronic terminal 150 to consult in the data bank and send the information regarding the prepaid amount assigned to said financial instrument of payment identification number to the buyer's electronic terminal 120.

In an additional embodiment of the present invention, the prepaid amount is associated with, besides the financial instrument of payment identification number and the security code, to the name of the person who made the prepayment together with a buyer's identification code, thus making it nominative, where the name of the person who makes the prepayment is only stored in the data bank, and, where the buyer's identification code, besides being stored in a data bank, is transmitted together with the financial instrument of payment identification number and the security code as required by the different functions of the system elements, as well as by the operating steps thereof.

In a further embodiment of the present invention, the prepaid amount is associated with, besides the financial instrument of payment identification number and with the security code, to the name of a second person authorized to receive the prepaid money, so that the financial instrument of payment could be charged only by a specific supplier, where the supplier's name is stored in the data bank and included on the financial instrument of payment.

In a preferred embodiment of the present invention, the financial instrument of payment is a bill, which denomination could differ according to the consumer requirement, as well as to the currency used in the place in which electronic terminal 140 is located, where the bill has been issued.

In an additional embodiment, the data base includes updated information regarding currency exchange of all existing currencies, so that the comparison made by data storage electronic terminal 150 between the product or service cost and prepaid amount is carried out in the currency the supplier uses for its commercial transactions at the exchange rate of the time of the transaction. In case the buyer has made a prepayment in a different currency, the prepaid amount being stored in the data base at the currency used by the buyer in the place where the prepayment electronic terminal 130 is located.

In a second embodiment of the system of the present invention, the comparison functions between products and/or services cost and prepaid amount is made at the supplier's electronic terminal 110, which receives the information regarding a prepaid amount from data storage electronic terminal 150.

In a further embodiment, computers network 100 includes a virtual bank (not shown by the diagram), in which it is possible to store the amount resulting from the difference between the transaction cost and the originally prepaid amount in an account specified by the buyer instead of assigning it to the financial instrument of payment 140.

In a preferred embodiment of the present invention, communication among supplier's electronic terminal 110, buyer's electronic terminal 120 and data storage electronic terminal 150, is carried out by means of the Internet information transmission protocol known as TCP/IP using the respective telecommunication means; whilst communication between prepayment electronic terminal 130 and data storage electronic terminal 150 is made by means of the use of any protocol for information transmission which allows maximum communication efficiency using the respective telecommunication means. Preferably, data storage electronic terminal 150 is a network server; supplier's electronic terminal 110 is selected between a network server, a telephone commuter or combinations thereof; prepayment electronic terminal 130 is a computer without capacity for storing information and the buyer's electronic terminal 120 is selected from personal computers, cable television encoders/decoders, satellite television encoders/decoders and electronic telephones.

in a preferred embodiment, telecommunication means of the diverse electronic terminals of the system of the present invention consist of a device for communication by optical fiber, satellite, cellular, radio signal, coaxial cable, and/or any available telecommunication means. The preferred telecommunication device is a modem.

The present invention also comprises a method for carrying out commercial transactions by means of the use of the system, which comprises the following steps:
(a) Prepayment of a determined amount at a point for generating financial instruments of payment 140 that have a prepayment electronic terminal 130 which generates a financial instrument of payment 140 with an identification number incorporated and associated with the prepaid amount to which a security code separately reported to the person settling up the prepayment is designated, said identification number, said security code and said prepaid amount being stored in a data base of a data storage electronic terminal 150.
(b) Search and selection by a buyer of a product or service offered by a supplier, preferably said search and selection being carried out through a buyer's electronic terminal 120 and said product or service being offered by a supplier's electronic terminal 110.
(c) Selecting a financial instrument of payment 140 as a way of payment of the product or service, preferably through the buyer's electronic terminal 120.
(d) Requisition of the identification number of at least one financial instrument of payment 140 by the supplier, preferably from the supplier's electronic terminal 110, and receipt by the supplier of said identification number together with the respective security code, provided by the supplier, preferably through the use of supplier's 110 and buyer's 120 electronic terminals respectively.
(e) Verification on the data storage electronic terminal 150 data base of the prepaid amount associated with financial instrument of payment 140 identification number by the supplier, said terminal 150 designating a transaction identification number only if the received security code corresponds to that stored in the data base for the financial instrument of payment 140 identification number, said verification being preferably carried out from supplier's electronic terminal 110.
(f) Requisition to the buyer of a second financial instrument of payment 140 identification number together with the respective security code, in case the prepaid amount associated with the financial instrument of payment 140 identification number originally provided be less than the cost of the product or service to be acquired.
(g) Transaction cancellation in case the buyer fails to provide a second financial instrument of payment 140 identification number with an associated prepaid amount enough to at least equal the cost of the product or service.
(h) Transaction authorization and sending transaction identification number, financial instrument of payment 140 identification number together with the respective security code and associated amount thereof, resulting from the difference between the cost of the product or service and the amount prepaid to the supplier, preferably through the data storage electronic terminal 150 and the supplier's electronic terminal 110 means, which at same time, sends same information to the buyer, preferably through the buyer's electronic terminal 120.
(i) Collection by the supplier of the product or service cost by means of the transaction identification number,

In a preferred embodiment of the present invention, the buyer makes the prepayment in the currency of the place in which the point for generating financial instruments of payment 140, while verification of step (e) is carried out in the currency the supplier uses for its commercial transactions, using the rate of exchange of the moment the transaction is made.

Accordingly to the above described, it could be noted that for the system for carrying out a prepayment for products or services acquired through electronic means and the method to settle commercial transactions therewith, have been developed in order to allow risk-less worldwide commercial transactions, for both, the supplier and the buyer. It shall be evident for those skilled in the art, that the embodiments of the system and method described above and illustrated by the attached drawings, are intended only to illustrate the present invention but do not limit the same, since considerable numerous changes are possible in its details without falling out of the scope of the invention.

While a specific embodiment of the invention has been illustrated and disclosed, it should be noted that numerous modifications thereby could be made, such as the use of an internal computer network, electronic terminals different to those preferred, or, the change of functions carried out by each element of the system of the present invention to another element thereof. Therefore, the present invention shall not be restricted except by what the prior art demands and by the spirit of the appended claims.

## Claims

1. A system for carrying out a prepayment for products or services acquired through electronic means of the type that comprises an electronic network in which at least one products or services supplier's electronic terminal and at least one buyer's electronic terminal is connected, **characterized in that** said network includes at least one prepayment electronic terminal able to generate a financial instrument of payment with an identification number associated with an amount prepaid by a buyer and to a security code; a data storage electronic terminal connected to both, the prepayment electronic terminal and the other computers of the electronic network, said data storage electronic terminal including a data base in which the identification number of the financial instrument of payment together with its security code and the prepaid amount associated thereof are registered.

2. A system for carrying out a prepayment for products or services acquired through electronic means, according to claim 1, further **characterized in that** each of the electronic terminals of the system include telecommunication means to allow information exchange within the electronic network; processing means with at least a software to carry out several operations according to the specific functions of each electronic terminal of the system; data input and output means to allow interaction among electronic terminals and users thereof; and, data storage means, whether temporal or permanent, to allow storage of information regarding identification numbers of financial instrument of payment, together with the security code and the prepaid amount associated therewith, according to the functions of each electronic terminal.

3. A system for carrying out a prepayment for products or services acquired through electronic means, according to claim 2, the prepayment electronic terminal further includes printing means and have the functions of sending information upon a prepaid amount to the data storage electronic terminal; receiving the financial instrument of payment identification number associated with the prepaid amount from the data storage electronic terminal together with its security code; and, generating a financial instrument of payment with the identification number associated with the prepaid amount incorporated therein,

4. A system for carrying out a prepayment for products or services acquired through electronic means, according to claim 2, further **characterized in that** the data storage electronic terminal comprises means for receiving information upon the prepaid amount from the prepayment electronic terminal; means for sending the identification number of the financial instrument of payment associated with the prepaid amount to the prepayment electronic terminal; means for designating the security code associated with the identification number of the financial instrument of payment; means for registering the identification number of the financial instrument of payment, the security code and the prepaid amount; means for receiving the identification number of at least one financial instrument of payment together with the security code thereof and the cost of the product or service to be acquired, from the supplier's electronic terminal or from the buyer's electronic terminal; means for comparing the security code received with respect to that stored in the data base for an identification number of the financial instrument of payment; means for identifying the prepaid amount through consulting on the data base; means for designating a transaction identification number associated with the identified prepaid amount; means for comparing the cost of the selected product or service with respect to the prepaid amount; means for requesting an identification number of at least one second financial instrument of payment with its respective security code to the supplier's electronic terminal in case the cost of a product or service to be acquired exceeded the prepaid amount; means for receiving the identification number of the second financial instrument of payment together with its respective security code and to perform the addition of the amount associated with the number of the second financial instrument of payment plus the prepaid amount associated with the transaction identification number, once the data bank was consulted; means for canceling the transaction in case the prepaid amount be less than the cost of the product or service to be acquired and the identification number of an additional instrument of payment has not been received; means for deducting the cost of the product or service from the prepaid amount associated with the transaction identification number, designating a cost equal to zero in case of canceling the transaction; means for associating the amount resulting from the difference between the cost of the transaction and the originally prepaid amount with the identification number of the financial instrument of payment; means for sending the identification number of the financial instrument of payment, the transaction identification number and the security code to the supplier's electronic terminal, said identification number of the financial instrument of payment being associated now to the amount resulting from the difference between the transaction cost and the originally prepaid amount; and, means for sending the prepaid amount associated with the identification number of the financial instrument of payment with its respective security code to the buyer's electronic terminal.

5. A system for carrying out a prepayment for products or services acquired through electronic means, according to claim 2, further **characterized in that** the supplier's electronic terminal comprises means for sending information upon products and/or services which are provided to the buyer's electronic terminal; means to receive selection information of a product and/or service to be acquired from the buyer's electronic terminal; means for sending information of several ways of payment of products and/or services to the buyer's electronic terminal; means to receive information regarding selection of a way of payment from the buyer's electronic terminal; means for sending information upon request of at least one financial instrument of payment to the buyer's electronic terminal; means for receiving the identification number of at least one financial instrument of payment from the buyer's electronic terminal together with its respective security code, as a way of payment of a product or service to be acquired; means for sending the identification number of the financial instrument of payment together with the respective security code and the cost of the product or service to be acquired to the data storage electronic terminal; means for receiving the transaction identification number from the data storage electronic terminal; means for receiving the identification number of the financial instrument of payment together with the amount associated thereof and the respective security code from the data storage electronic terminal; means for sending the transaction identification number, the financial instrument of payment identification number together with the amount associated thereof and the respective security code to the buyer's electronic terminal.

6. A system for carrying out a prepayment for products or services acquired through electronic means, according to claim 1, further **characterized in that** the buyer's electronic terminal comprises means for sending information upon a selection of products and/or services to the supplier's electronic terminal; means for receiving information upon the request of at least one financial instrument of payment from the supplier's electronic terminal; means for sending the identification number of at least one financial instrument of payment to the supplier's electronic terminal or the data storage electronic terminal, together with its respective security code; means for receiving the transaction identification number from the supplier's electronic terminal or from the data storage electronic terminal; means for receiving the identification number of the financial instrument of payment together with the amount associated thereof and the respective security code from the data storage electronic terminal or from the supplier's electronic terminal; means for receiving the transaction identification number from the supplier's electronic terminal.

7. A system for carrying out a prepayment for products or services acquired through electronic means, according to claim 1, further **characterized in that** the prepaid amount is further associated with the name of the person who made the prepayment together with a buyer's identification code.

8. A system for carrying out a prepayment for products or services acquired through electronic means, according to claim 1, further **characterized in that** the financial instrument of payment is a bill, which denomination could vary according to the consumer's requirement, as well as to the currency used at the place in which the electronic terminal that generates said bill is located.

9. A system for carrying out a prepayment for products or services acquired through electronic means, according to claim 4, further **characterized in that** the data base includes updated information regarding exchange rates of all existing currencies, so that the comparison by the data storage electronic terminal between the cost of the product or service and the prepaid amount is made in the currency the supplier uses for its commercial transactions at the exchange rate valid at the moment of the transaction, in case the prepayment is made in a different unit of currency, the prepaid amount being stored in the data base in the currency used at the place in which the prepayment electronic terminal is located.

10. A system for carrying out a prepayment for products or services acquired through electronic means, according to claim 4, further **characterized in that** the system makes use of a virtual bank included in the electronic network, in which it is possible to store the amount resulting from the difference between the cost of the product and/or service and the originally prepaid amount in an account specified from the buyer's electronic terminal instead of designating it to the financial instrument of payment.

11. A system for carrying out a prepayment for products or services acquired through electronic means, according to claim 1, further **characterized in that** communication among supplier's electronic terminal, buyer's electronic terminal and the data storage electronic terminal is carried out through the Internet information transmission protocol, known as TCP/IP by using the respective telecommunication means of each electronic terminal.

12. A system for carrying out a prepayment for products or services acquired through electronic means, according to claim 1, further **characterized in that** communication between the prepayment electronic terminal and the data storage electronic terminal is carried out through the use of any information transmission protocol which allows maximum efficiency in the communication by using the respective telecommunication means.

13. A system for carrying out a prepayment for products or services acquired through electronic means, according to claim 2, further **characterized in that** the data storage electronic terminal is a network server.

14. A system for carrying out a prepayment for products or services acquired through electronic means, according to claim 2, further **characterized in that** the supplier's electronic terminal is selected among a network server, a telephone switchboard or combinations thereof.

15. A system for carrying out a prepayment for products or services acquired through electronic means, according to claim 2, further **characterized in that** the prepayment electronic terminal is a computer without permanent data storage capacity.

16. A system for carrying out a prepayment for products or services acquired through electronic means, according to claim 2, further **characterized in that** the buyer's electronic terminal is selected from personal computers, cable television encoders/decoders, satellite television encoders/decoders and electronic telephones.

17. A system for carrying out a prepayment for products or services acquired through electronic means, according to claim 2, further **characterized in that** the telecommunication means of the different electronic terminals consist of a device for communication by optical fiber, satellite, cellular, radio signal, coaxial cable, and/or any available telecommunication means.

18. A system for carrying out a prepayment for products or services acquired through electronic means, according to claim 17, further **characterized in that** the communication device is a modem.

19. A method to settle electronic commercial transactions **characterized in that** it comprises the following steps:
(a) Prepayment of a determined amount at a point for generating financial instruments of payment that includes a prepayment electronic terminal, which generates a financial instrument of payment with an identification number associated with the prepaid amount included, and to which a security code separately reported to the person who makes the prepayment is designated, said identification number, said security code and said prepaid amount being finally stored in a data base of a data storage electronic terminal.
(b) Search and selection by a buyer of a product or service offered by a supplier, preferably said search and selection being carried out through a buyer's electronic terminal and said product or service being offered at a supplier's electronic terminal.
(c) Selection of the financial instrument of payment, as a way of payment of a product or service, preferably through the buyer's electronic terminal.
(d) Identification number of at least one financial instrument of payment requisition, carried out by the supplier preferably from the supplier's electronic terminal, and receipt by the supplier of said identification number together with the respective security code, provided by the supplier, preferably through the use of the supplier's and the buyer's electronic terminals respectively.
(e) Verification on the data storage electronic terminal data base of the prepaid amount associated with the identification number of the financial instrument of payment by the supplier, said data storage electronic terminal designating a transaction identification number only if the received security code corresponds to that stored in the data base for the identification number of the financial instrument of payment, said verification being preferably carried out from supplier's electronic terminal.
(f) Request to the buyer of an identification number of a second financial instrument of payment together with the respective security code, in case the prepaid amount associated with the financial instrument of payment identification number originally provided be less than the cost of the product or service to be acquired.
(g) Transaction cancellation in case the buyer fails to provide the identification number of a second financial instrument of payment with an associated prepaid amount enough to at least equal the cost of the product or service.
(h) Transaction authorization and sending of the transaction identification number, the identification number of the financial instrument of payment together with the respective security code and the associated amount thereof, resulting from the difference between the cost of the product or service and the amount prepaid to the supplier, preferably through data storage electronic terminal and supplier's electronic terminal means, which subsequently sends the same information to the buyer, preferably through buyer's electronic terminal.
(i) Collection by the buyer of the product or service cost by means of the transaction identification number.

20. A method for carrying out electronic commercial transactions, according to claim 19, further **characterized in that** the buyer carries out the prepayment in the currency of the place in which the point for generating instruments of payment is located, while verification of (e) is made in the currency the supplier uses for its commercial transactions, using the exchange rate of the moment of the transaction.

21. A method for carrying out electronic commercial transactions, according to Claim 19, further **characterized in that** the financial instrument of payment that has an identification number incorporated therein associated with the prepaid amount and to which a security code is designated, is associated also to the name of the person who carried out the prepayment together with a buyer's identification number, said name being stored only in the data bank, and the buyer's identification number, besides being stored in the data bank, is transmitted with the security code each time the latter is transmitted.

22. A method for carrying out electronic commercial transactions, according to claim 19, further **characterized in that** the amount resulting from the difference between the cost of the product or service and the prepaid amount is stored in a virtual bank account indicated by the user.

23. A method for carrying out electronic commercial transactions, according to claim 19, further **characterized in that** the financial instrument of payment is a bill, which denomination could vary according to consumer's requirement, as well as to the currency used in the place in which the electronic terminal that generates said bill is located.
